# EUROPEAN PATENT APPLICATION

(11) **EP 3 493 048 A1**
(43) Date of publication of application: **05.06.2019**
(21) Application number: 17833838.0
(22) Date of filing: 01.06.2017
(51) Int. Cl.: G06F 3/16, G06F 3/0481, G06F 3/0488, G06F 17/28, G10L 13/00, G10L 15/00

(54) **TRANSLATION DEVICE AND TRANSLATION SYSTEM**

(30) Priority: 28.07.2016 JP 2016148859
(71) Applicant: Panasonic Intellectual Property Management Co., Ltd., Osaka-shi, Osaka 540-6207 (JP)
(72) Inventor: MOCHIDA Tetsuji, Osaka-shi, Osaka 540-6207 (JP)
(74) Representative: Vigand, Philippe
(86) International application number: PCT/JP2017/020457
(87) International publication number: WO 2018/020828

(57) **Abstract**

Translation device (1) includes: operation input unit (11); voice input unit (12); translation information obtaining unit (16); information output unit (17); execution unit (13); and controller (14). A user's operation is input to operation input unit (11). A voice is input to voice input unit (12). Translation information obtaining unit (16) obtains a translation result of the voice having been input to voice input unit (12). Information output unit (17) outputs the translation result. Controller (14) causes execution unit (13) to perform, in synchronization with the outputting of the translation result by information output unit (17), a processing based on an operation content of the user's operation having been input to operation input unit (11) while the voice corresponding to the translation result was being input.

## Description

### TECHNICAL FIELD

The present disclosure relates to a translation device and a translation system.

### BACKGROUND ART

PTL 1 discloses a communication system equipped with a translation unit that translates an input voice. This communication system is equipped with: a microphone to input a speech voice, spoken by a person concerned, in a video-conference device or the like; and an image memory in which an image of an image signal taken by a television camera is temporarily accumulated. In this communication system, when a voice signal is communicated, the voice is output after being translated. In addition, an image having been input corresponding to the input voice is displayed in synchronism with outputting of the translation of the voice. This operation makes it possible to read a facial expression and the like of a communication partner from the image corresponding to the translated voice in a video-conference and the like.

PTL 2 discloses a technique to enable a smooth conversation between users talking with each other through a speech translation device. This speech translation device is equipped with a speech recognition unit that performs speech recognition of a voice signal in a first language; a first machine translation unit that translates the recognized first language into a second language; and a second machine translation unit that reversely translates the translated second language into the first language. This speech translation device voice-outputs a synthetic voice of a result of the machine translation and a synthetic voice of a result of the reverse translation in synchronism with each other. These outputs voices enable one user to confirm, while the other user is listening to the synthetic voice of the result of the machine translation of the voce emitted by the one user, whether the content of the speech spoken by the one user is correctly translated.

### Citation List

### Patent Literature

PTL 1: Japanese Patent No. 2664679
PTL 2: Unexamined Japanese Patent Publication No. 2015-060332

### SUMMARY OF THE INVENTION

The present disclosure provides a translation device and a translation system that make it possible for a user speaking words as a translation object to easily communicate a content of the user's intention.

A translation device in one aspect of the present disclosure includes: an operation input unit; a voice input unit; a translation information obtaining unit; an information output unit; an execution unit; and a controller. A user's operation is input to the operation input unit. A voice is input to the voice input unit. The translation information obtaining unit obtains a translation result of the voice having been input to the voice input unit. The information output unit outputs the translation result. The controller causes the execution unit to perform, in synchronization with outputting of the translation result by the information output unit, a processing based on an operation content of the user's operation having been input to the operation input unit while the voice corresponding to the translation result was being input.

A translation system in another aspect of the present disclosure includes a translation device and a translation server. The translation server receives voice information representing a voice having been input to a voice input unit from the translation device, and performs a translation process on the voice information.

With the translation device and the translation system in the present disclosure, when a user's operation is input while a voice as a translation object was being input, a processing based on a content of the user's operation is output in synchronization with outputting of a translation result. This operation can make it easy for the user speaking a speech as a translation object to communicate the content of the user's intention.

### BRIEF DESCRIPTION OF DRAWINGS

FIG. 1 is a block diagram showing a translation system according to a first exemplary embodiment.
FIG. 2 is an example of a hardware configuration of a translation device in the translation system.
FIG. 3A is a diagram for describing an operation of the translation device in the translation system.
FIG. 3B is a diagram for describing an operation of the translation device in the translation system.
FIG. 3C is a diagram for describing an operation of the translation device in the translation system.
FIG. 3D is a diagram for describing an operation of the translation device in the translation system.
FIG. 4 is a sequence diagram showing an operation of the translation system according to the first exemplary embodiment.
FIG. 5 is a timing chart for describing an operation example of the translation device according to the first exemplary embodiment.
FIG. 6 is a flowchart for describing an input process by the translation device.
FIG. 7 is a diagram for describing a history database in the translation device.
FIG. 8 is a flowchart for describing a playback process by the translation device.
FIG. 9A is a diagram for describing an operation of a translation device in a modified example of the first exemplary embodiment.
FIG. 9B is a diagram for describing an operation of the translation device in the modified example of the first exemplary embodiment.
FIG. 9C is a diagram for describing an operation of the translation device in the modified example of the first exemplary embodiment.
FIG. 10A is a diagram showing a display example of the translation device in the modified example of the first exemplary embodiment.
FIG. 10B is a diagram showing a display example of the translation device in the modified example of the first exemplary embodiment.
FIG. 10C is a diagram for describing an operation of the translation device in the modified example of the first exemplary embodiment.
FIG. 11 is a functional block diagram showing a translation system according to a second exemplary embodiment.
FIG. 12 is a functional block diagram showing a translation system according to a third exemplary embodiment.
FIG. 13A is a diagram showing a display example of the translation device according to the third exemplary embodiment.
FIG. 13B is a diagram showing a display example of the translation device according to the third exemplary embodiment.
FIG. 14A is a diagram for describing an operation of a translation device according a modified example.
FIG. 14B is a diagram for describing an operation of the translation device according the modified example.
FIG. 14C is a diagram for describing an operation of the translation device according a modified example.
FIG. 15 is a diagram for describing an operation of a translation device according another exemplary embodiment.

### DESCRIPTION OF EMBODIMENTS

Hereinafter, exemplary embodiments will be described in detail with reference to the drawings as appropriate. However, unnecessarily detailed description will not be given in some cases. For example, a detailed description of a well-known matter and a duplicated description of substantially the same configuration are omitted in some cases. This is to avoid the following description from being unnecessarily redundant and thus to help those skilled in the art to easily understand the description.

Note that the applicant provides the attached drawings and the following description to help those skilled in the art to sufficiently understand the present disclosure, and the applicant does not intend to use the drawings or the description to limit the subject matter of the claims.

### (First exemplary embodiment)

### 1. Configuration

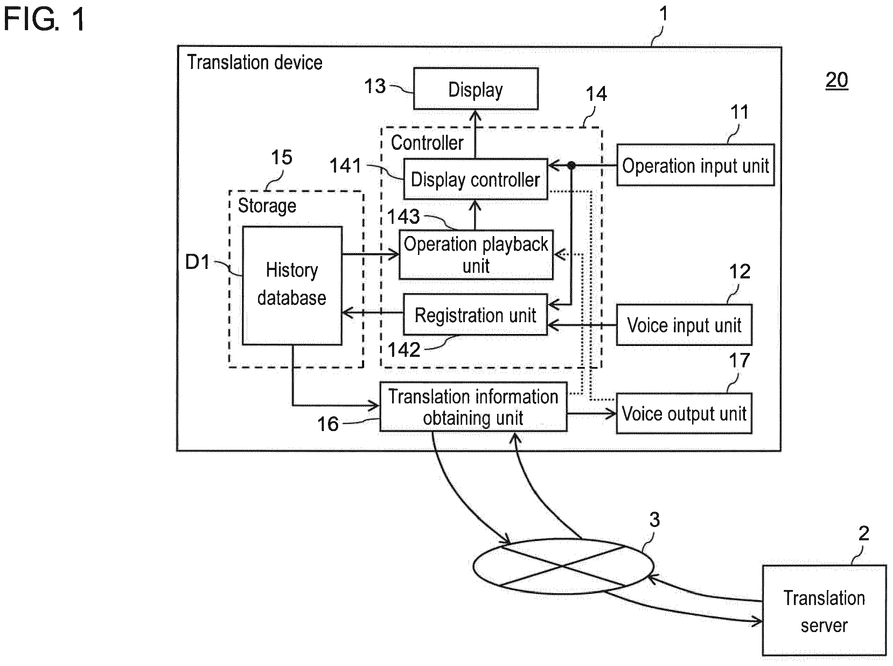

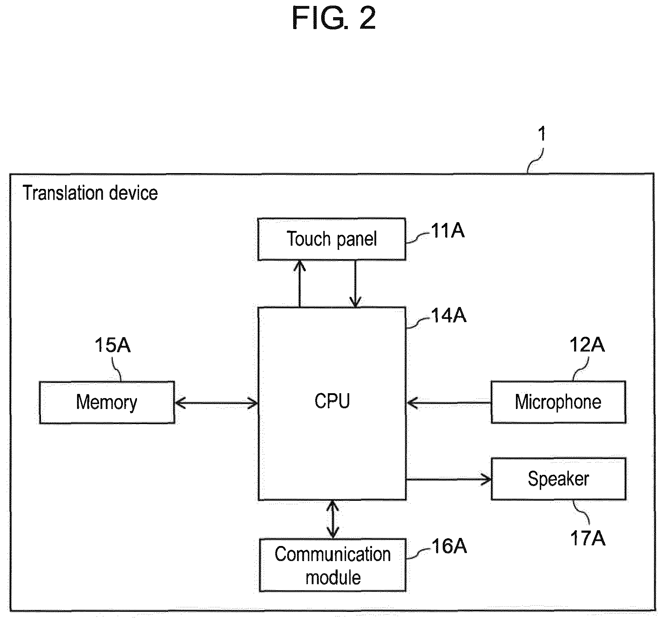

A configuration of a translation system according to the present exemplary embodiment is described with reference to FIGS. 1 and 2. FIG. 1 is a block diagram showing a translation system according to a first exemplary embodiment. FIG. 2 is an example of a hardware configuration of a translation device in the translation system.

Translation system 20 according to the present exemplary embodiment includes translation device 1 and translation server 2 as shown in FIG. 1. In the present exemplary embodiment, description is given to translation system 20 in which translation device 1 performs inputting and outputting of a voice and other operations and translation server 2 performs processing for machine translation. Translation system 20 according to the present exemplary embodiment machine-translates a voice spoken by a user and voice-outputs the translation from translation device 1 when the user operating translation device 1 converses with a conversation partner facing the user, for example. Translation device 1 and translation server 2 communicate data with each other via network 3 such as the Internet.

FIG. 2 shows an example of a hardware configuration of translation device 1. Translation device 1 includes touch panel 11A, microphone 12A, central processing unit (CPU) 14A, memory 15A, communication module 16A, and speaker 17A as shown in FIG. 2. Translation device 1 is configured with an information processing terminal, for example, a tablet terminal, a personal computer (PC), a smartphone, or a mobile terminal.

Referring back to FIG. 1, translation device 1 includes operation input unit 11, voice input unit 12, display 13, controller 14, storage 15, translation information obtaining unit 16, and voice output unit 17. Controller 14 includes display controller 141, registration unit 142, and operation playback unit 143.

Operation input unit 11 accepts various user's operations provided by the user operating translation device 1. Operation input unit 11 includes, for example, a touch sensor on touch panel 11A. When a touch operation is input with a display surface on touch panel 11A being touched, operation input unit 11 generates a signal representing, for example, a touch position by coordinates and outputs the signal to display controller 141 or the like.

Operation input unit 11 is not limited to touch panel 11A and may include various input devices such as a mouse and a keyboard. Further, touch panel 11A may be configured to be able to input, for example, a gesture operation in the vicinity of the display surface. The user's operation includes various operations such as a touch operation, a gesture operation, a mouse operation, and a keyboard operation. Operation input unit 11 obtains an operation content of the user's operation expressed by, for example, a history of the touch position.

Voice input unit 12 is configured with, for example, microphone 12A. Voice input unit 12 receives a voice input to generate voice information (voice data) representing the input voice. The input voice includes, for example, a voice spoken by the user.

Display 13 is, for example, a liquid crystal display, an organic electroluminescence (EL) display, or other displays, which constitute the display surface of touch panel 11A. Display 13 displays various information, under control of display controller 141. For example, display 13 displays a screen of a predetermined application software and an image corresponding to the content of the user's operation. Display 13 is an example of an execution unit of translation device 1 in the present exemplary embodiment.

Controller 14 wholly controls the operations of various parts in translation device 1. Controller 14 is configured with, for example, CPU 14A implementing a predetermined function in cooperation with software. Controller 14 reads out data and programs stored in storage 15 to perform various arithmetic processing and thus implements various functions of display controller 141, registration unit 142, operation playback unit 143, and the like. Further, controller 14 has an internal memory configured with, for example, a static random access memory (SRAM), a dynamic random access memory (DRAM), or the like.

Display controller 141 controls a display operation on display 13, on the basis of a signal from operation input unit 11. For example, display controller 141 determines, on touch panel 11A, a touch position at which a touch operation is being performed, and performs control to display an image corresponding to a trajectory of the touch position.

Registration unit 142 writes, in storage 15, information temporarily stored in the internal memory of controller 14 or other information to register the information in history database D1. History database D1 is a database that associates an operation content of a user's operation with an input voice to manage a history of the operation content. History database D1 will be described later in detail.

Operation playback unit 143 generates, for example, a predetermined command on the basis of the information stored in history database D1. By this operation, operation playback unit 143 sets an operation for playing back the operation content of the user's operation.

Note that, controller 14 may be configured with a hardware circuit such as a dedicated electronic circuit designed to realize a predetermined function or a reconfigurable electronic circuit. Controller 14 may be configured with various semiconductor integrated circuits such as a CPU, a micro processing unit (MPU), a microcontroller, a digital signal processor (DSP), a field programmable gate array (FPGA), or an application specific integrated circuit (ASIC).

Storage 15 is a storage medium that stores a program and data necessary to realize a function of translation device 1. For example, storage 15 stores history database D1 described above. Storage 15 includes memory 15A that is a high-speed memory such as an SRAM or a DRAM or is a flash memory.

In the present exemplary embodiment, translation information obtaining unit 16 obtains translation information containing a translation result of a specific input voice through data communication with translation server 2 via network 3. Translation information obtaining unit 16 includes communication module 16A that performs communication based on, for example, a predetermined communication standard. The predetermined communication standard includes communication standards such as IEEE 802.3 and IEEE 802.11a/11b/11g/11ac. Translation information obtaining unit 16 may be realized in cooperation with software such as a control program on CPU 14A.

Voice output unit 17 is configured with, for example, speaker 17A. Voice output unit 17 voice-outputs a translation result represented by, for example, the translation information obtained by translation information obtaining unit 16. Voice output unit 17 is an example of an information output unit of translation device 1 in the present exemplary embodiment.

Translation server 2 is configured with one or a plurality of server devices such as an application service provider (ASP) server, for example. Translation server 2 transmits and receives voice information to and from translation device 1 via network 3. Translation server 2 performs processes such as a speech recognition process, a translation process, and a voice synthesizing process on the basis of the received voice information. In translation server 2, the server devices performing the processes may be integrally configured or separately configured. Alternatively, translation server 2 may perform cloud computing.

### 2. Operation

Hereinafter, operations of the translation system and the translation device according to the present exemplary embodiment are described.

### 2-1. General description of operation

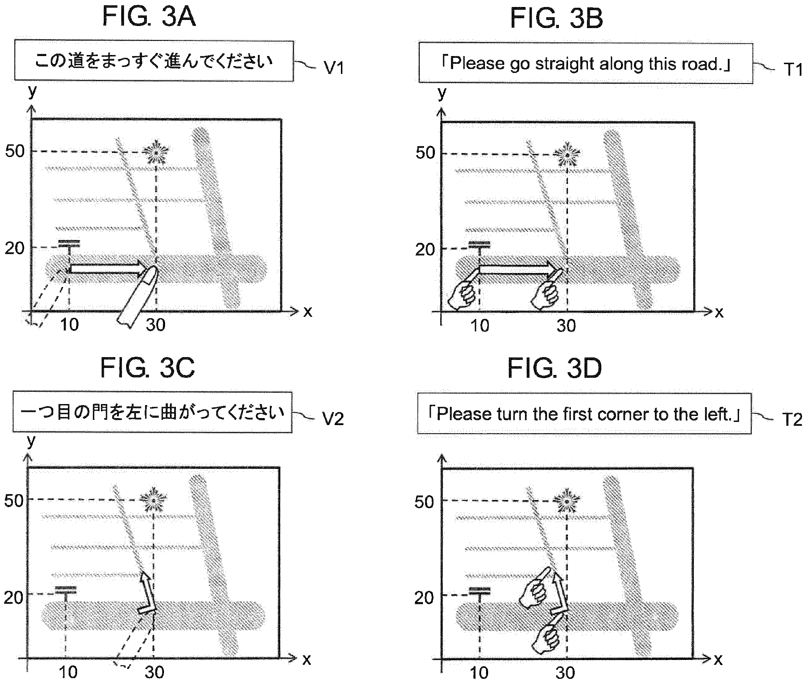

An operation of translation system 20 according to the present exemplary embodiment is generally described with reference to FIG. 3A to FIG. 3D. FIG. 3A to FIG. 3D are diagrams for describing the operation of translation device 1 in translation system 20.

FIG. 3A to FIG. 3D show a series of usage examples of translation device 1 according to the present exemplary embodiment. Translation device 1 can be used in an application to treat and give directions to a foreigner. Hereinafter, a user who uses translation device 1 to guide is referred to as a "host," and a user who is guided is referred to as a "guest." In the present usage example, the language used by the host is Japanese, and the language used by the guest is English.

FIG. 3A shows a display example of touch panel 11A when a host is speaking. FIG. 3B shows a display example when translation device 1 is voice-outputting a translation result after the state of FIG. 3A. FIG. 3C shows a display example when the host is further speaking after the state of FIG. 3B. FIG. 3D shows a display example when translation device 1 is voice-outputting a translation result after the state of FIG. 3C.

The usage examples of FIG. 3A to FIG. 3D are usage examples when the host gives directions to the guest. In one example, translation system 20 according to the present exemplary embodiment performs a translation operation on speech sentences one by one.

For example, in the state of FIG. 3A, the host is speaking a speech sentence of voice V1. Translation system 20 input the voice of the speech sentence from translation device 1 and performs machine translation on translation server 2 (see FIG. 1). After a predetermined period (for example, after two seconds) has elapsed from an end of the speech, translation device 1 voice-outputs a translation sentence "Please go straight along this road.", which is translation result T1 corresponding to voice V1 as shown in FIG. 3B.

Further, after the voice is output as FIG. 3B, the host further speaks a speech sentence of voice V2 as shown in FIG. 3C. In response to this speech sentence, as shown in FIG. 3D, translation device 1 voice-outputs a translation sentence "Please turn the first corner to the left.", which is translation result T2 corresponding to voice V2.

It is supposed that in the case that the host uses translation device 1 to give directions as described above, if the host explains while pointing a finger at a road on a map, the host can easily transfer a content of what the host wants to explain to the guest. Therefore, in translation system 20 according to the present exemplary embodiment, when the host gives various guiding to the guest while using machine translation, translation device 1 voice-outputs the translation results and at the same time displays auxiliary information such as a map, a photograph, how to use something, and where something is. The usage examples of FIG. 3A to FIG. 3D display a map screen.

In the example of FIG. 3A, the host is performing a touch operation of tracing, with a finger, a specific road on touch panel 11A while speaking the words of voice V1. At this time, it is difficult for the guest, who cannot directly understand what the host speaks, to understand the content of the host's intention, from the user's operation that is visually recognized while the host is speaking. To address this issue, translation device 1 according to the present exemplary embodiment plays back, in synchronization with the voice output of the translation result, the operation content of the user's operation that was input from operation input unit 11 while the voice of the user's speech was being input.

For example, as shown in FIG. 3B, while voice-outputting the translation sentence "Please go straight along this road.", which is translation result T1, translation device 1 displays an image in which the specific road is traced by, for example, a hand-shaped icon. This operation makes it easy to communicate to the guest which road is indicated by "this road" in the translation sentence.

Further, in the example of FIG. 3C, the user performs a touch operation in which the user traces a specific corner with his or her finger on touch panel 11A while speaking the words of voice V2. Then, as shown in FIG. 3D, translation device 1 displays an image in which an icon traces the specific corner while voice-outputting a translation sentence "Please turn the first corner to the left.", which is translation result T2 corresponding to voice V2. This operation makes it easy to communicate to the guest where the corner represented by "the first corner" in the translation sentence is and what direction "the left" represents.

Further, in the examples of FIGS. 3A and 3C, when the host is performing a touch operation of tracing touch panel 11A, touch panel 11A is displaying an arrow image representing a trajectory of the tracing. The arrow images displayed in the display examples of FIGS. 3A and 3C are displayed also at a time of voice-outputting of the translation result as shown in FIGS. 3B and 3D in a similar way. As described above, since the operation content visually recognized by the host at the time of speaking is played back itself at the time of translation, unnaturalness of using translation device 1 can be reduced, and the host can thus easily communicate the host's intention.

Hereinafter, the operations of the translation system and the translation device according to the present exemplary embodiment are described in detail.

### 2-2. Operation of translation system

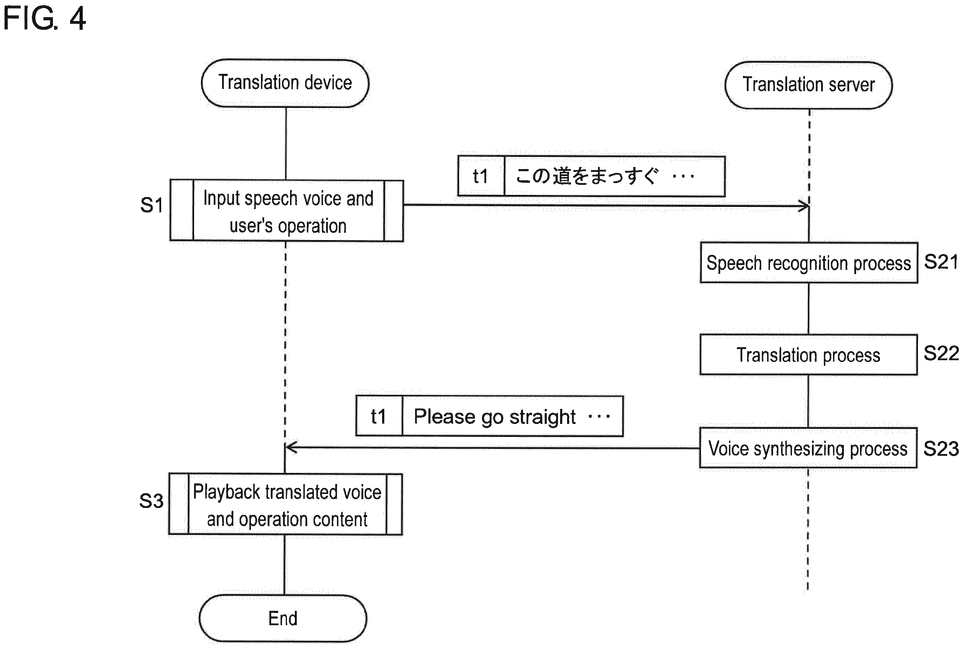

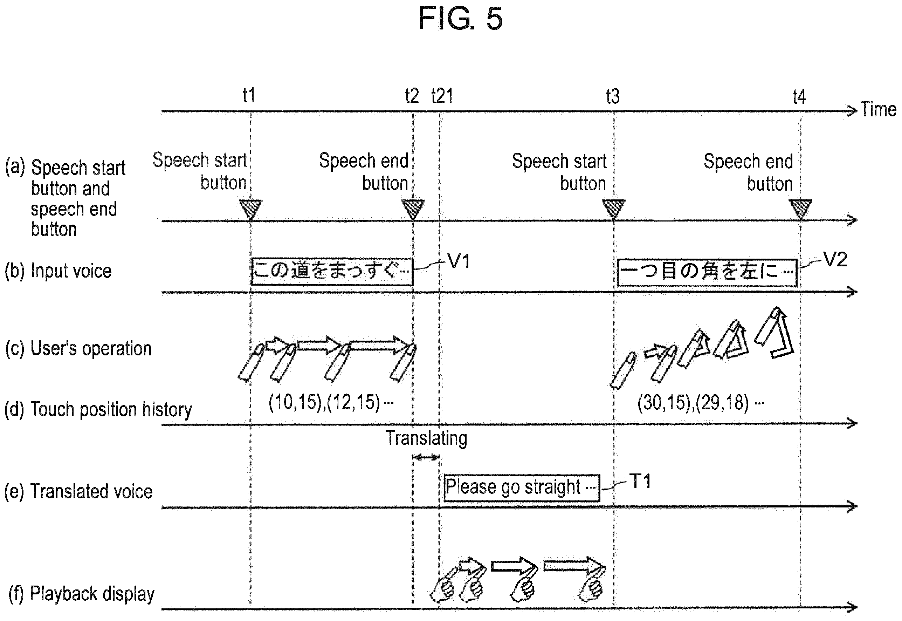

The operation of translation system 20 according to the present exemplary embodiment is described with reference to FIGS. 4 and 5. FIG. 4 is a sequence diagram showing the operation of translation system 20 according to the present exemplary embodiment. FIG. 5 is a timing chart for describing the operation of translation device 1 according to the present exemplary embodiment.

Part (a) of FIG. 5 shows an operation timing of a speech start button and a speech end button. Part (b) of FIG. 5 shows an input timing of an input voice. Part (c) of FIG. 5 shows an operation timing of a touch operation by a user. Part (d) of FIG. 5 shows a history of a touch position in a touch operation. Part (e) of FIG. 5 shows an output timing of a voice output of a translation result. Part (f) of FIG. 5 shows an operation timing of playback display.

In the sequence of FIG. 4, translation device 1 first performs an input process to accept a voice spoken by a user and a user's operation (step S1). For example, in the example of FIG. 3A, the input process of step S1 is performed at a period from time t1 to time t2 (see parts (a) to (d) of FIG. 5). Further, in the example of FIG. 3C, the input process of step S1 is performed in a period from time t3 to time t4.

In the example of FIG. 3A, voice information representing a speech sentence of voice V1 is transmitted together with identification information of the speech sentence from translation device 1 to translation server 2. The identification information of the speech sentence is, for example, time information representing time t1 of the start of a speech. The input process of step S1 will be described later in detail.

If translation server 2 receives the voice information and the identification information from translation device 1, translation server 2 performs a speech recognition process for speech recognition of the speech sentence represented by the received voice information (step S21). In this process, translation server 2 generates, for example, text data in Japanese as information representing the speech sentence having undergone speech recognition. Further, translation server 2 manages the generated text data in association with the identification information (t1) received together with the voice information.

Next, translation server 2 performs a translation process on the basis of the generated text data (step S22). In the examples of FIG. 3A to FIG. 3D, translation server 2 performs machine translation from Japanese to English in step S22. Translation server 2 generates text data of a translation sentence representing a translation result into English.

Next, translation server 2 performs the voice synthesizing process to synthesize a voice representing the translation sentence represented by the text data on the basis of the generated text data of the translation sentence (step S23). In the examples of FIGS. 3A and 3B, translation server 2 generates, by the voice synthesizing process, voice information of the translation sentence "Please go straight along this road." Translation server 2 transmits, to translation device 1, translation information containing the identification information (t1) received together with the voice information of the translation object and the translation information containing voice information of the translation result.

Upon receiving the translation information from translation server 2, translation device 1 performs a playback process for simultaneously playing back the voice information of the translation result and the operation content of the corresponding user's operation (step S3).

In the examples of FIGS. 3A and 3B, the processes from steps S21 to S23 are performed in a period from time t2, at which the input process (step S1) is finished, to time t21. Then, translation device 1 starts at time t21 a playback operation by the playback process of step S3 (see parts (e) and (f) of FIG. 5). At this time translation device 1 identifies the operation content of the user's operation corresponding to the voice information of the translation result on the basis of the identification information (t1) included in the translation information. The playback process of step S3 will be described later in detail.

When the process of step S3 is performed by translation device 1, the process of translation system 20 in this sequence is finished.

By the above processes, in translation system 20, translation server 2 performs machine translation, and translation device 1 can input a speech of a user and can output a translation result in synchronization with inputting and outputting of a user's operation.

In the above processes, each of the processes of steps S21, S22, and S23 may be performed on different server devices included in translation server 2, for example, by adding identification information when each process inputs and outputs.

Transmission and reception of data among steps S21 to S23 may be performed within translation server 2. Alternatively, every time when each process is completed, translation server 2 may return data back to translation device 1, and translation device 1 may transmit the data to the next processing server. This arrangement makes it possible to use speech recognition and translation of different service companies, for example.

Alternatively, part or all of the speech recognition process (step S21), the translation process (step S22), and the voice synthesizing process (step S23) may be performed by translation device 1 instead of translation server 2.

### 2-2-1. Input process on translation device

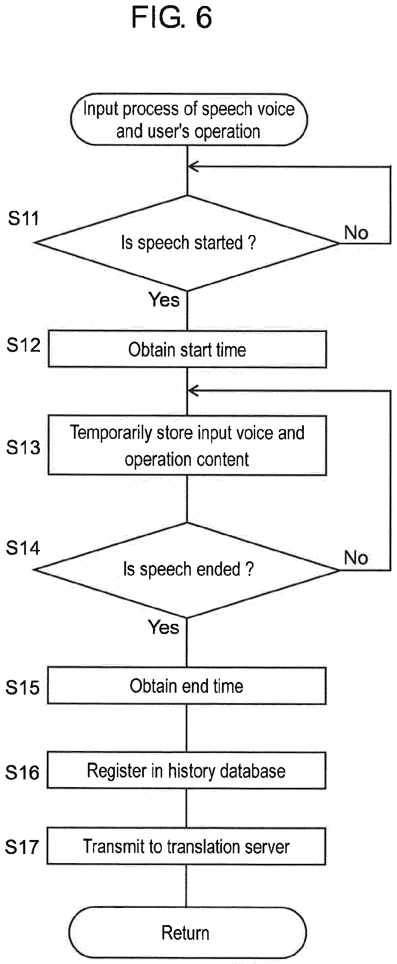

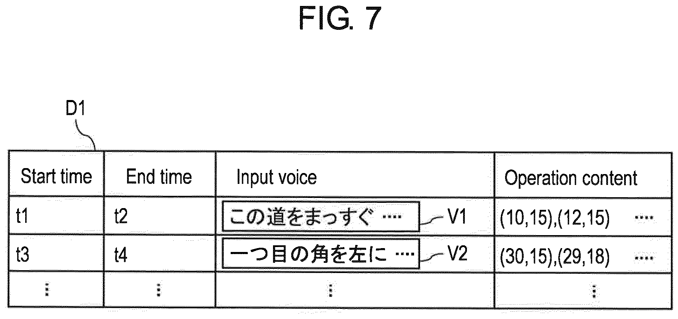

The input process on translation device 1 in step S1 of FIG. 4 is described with reference to FIGS. 5 to 7. FIG. 6 is a flowchart showing the input process (step S1 of FIG. 4) on translation device 1. FIG. 7 is a diagram for describing history database D1 in translation device 1.

The process according to the flowchart of FIG. 6 is started in a state in which display 13 of touch panel 11A is previously displaying the speech start button and the speech end button in addition to a map screen exemplified in FIG. 3A.

With respect to the flowchart of FIG. 6, controller 14 of translation device 1 detects whether a user has started to speak (step S11). In the present exemplary embodiment, the detection process of step S11 is performed on the basis of a signal generated by operation input unit 11 in response to an operation of pushing down the speech start button. Controller 14 repeats the process of step S11, for example, cyclically (step S11: No) until a start of a speech is detected.

If controller 14 detects that a speech is started (step S11: Yes), controller 14 obtains a start time at which the speech is started (step S12). For example, in the example of FIG. 3A, the speech start button is pushed down at time t1 as shown in part (a) of FIG. 5. At this time, controller 14 branches to "Yes" in step S11 and obtains time t1 as the start time (step S12).

Next, controller 14 records, for example, in the internal memory, an input voice being input from voice input unit 12 and an operation content of a user's operation being input, together with the input voice, from operation input unit 11 (step S13). The process of step S13 is a process in which, in order to register the input voice and the operation content collectively in history database D1, the input voice and the operation content are temporarily stored while the user is speaking.

Next, controller 14 detects whether the user has finished speaking (step S14). In the present exemplary embodiment, the detection process of step S14 is performed on the basis of a signal generated by operation input unit 11 in response to an operation of pushing down the speech end button. Controller 14 repeats (step S14: No) the processes of steps S13 and S14 with a predetermined cycle, for example, 1/60 seconds until the speech is detected to be finished.

In the example of FIG. 3A, the user speaks in a period from time t1 to time t2 (parts (a) and (b) of FIG. 5). Controller 14 records, successively from time t1, voice V1 of a speech sentence being input via voice input unit 12 (step S13). Further, in the example of FIG. 3A, the user performs a touch operation simultaneously with speaking (part (c) of FIG. 5). For example, as shown in part (d) of FIG. 5, controller 14 records coordinates (10,15), (12,15), ··· of a touch position every 1/60 seconds as a history of a touch position by the touch operation (step S13).

If controller 14 detects that the speech is finished (step S14: Yes), controller 14 obtains an end time at which the speech is finished (step S15). For example, when the user pushes down the speech end button at time t2 after speaking one speech sentence (part (a) of FIG. 5), controller 14 finishes the process of temporal storage (step S13) and branches to "Yes" in step S14 to obtain time t2 as the end time (step S15).

Next, controller 14 functions as registration unit 142 and registers the temporarily stored input voice and operation content of the user's operation in history database D1 in association with each other (step S16). In step S16, controller 14 writes the information temporarily stored in the internal memory in storage 15. In the present exemplary embodiment, registration unit 142 registers information in history database D1, using a start time and an end time obtained. History database D1 is described with reference to FIG. 7.

In the present exemplary embodiment, history database D1 manages a "start time," an "end time," an "input voice," and an "operation content" in association with one another as shown in FIG. 7. In the example of FIG. 3A, in step S16, registration unit 142 records start time t1 and end time t2 in data items of "start time" and "end time" of history database D1, respectively. Further, registration unit 142 registers the temporarily stored voice information representing the input voice and operation content of the touch operation in association with time t1 and time t2. In history database D1, in the data item of "voice information" there is recorded, for example, a link to a data file of voice information representing an input voice. Further, in the data item of "operation content" there are recorded, for example, coordinates of a history of a touch position.

By using history database D1 exemplified in FIG. 7, it is possible to search an operation content associated with specific voice information by using a start time (or an end time) as a key. Further, the start time and the end time can be referred to calculate an input period in which the input voice and the user's operation associated with each other were input.

Next, controller 14 transmits the voice information of the input voice registered in history database D1 to translation server 2 via translation information obtaining unit 16 (step S17). In the present exemplary embodiment, controller 14 refers to history database D1 and adds, as identification information, the start time associated with the input voice to the voice information of the input voice. Then, controller 14 transmits the voice information to translation server 2 (see FIG. 4).

By performing the process of step S17, controller 14 of translation device 1 completes the process according to the flowchart. Then, the process on translation system 20 goes to step S21 of FIG. 4.

The above process enables the user to speak a content of a translation object and, at the same time, to input, in translation device 1, a user's operation corresponding to the content of the speech. Translation device 1 can accumulate the operation content of the user's operation performed simultaneously with the speech, in association with the input voice of the speech.

Further, for example, in the examples of FIGS. 3A and 3C, when a user's operation is input from operation input unit 11 in step S13, display controller 141 controls display on display 13, depending on a signal generated by operation input unit 11. With this arrangement, the host, who is speaking, can speak and, at the same time, can confirm a processing of the device based on the host's operation, so that the host can easily use translation device 1.

In the above description, history database D1 exemplified in FIG. 7 is described as an example of history database D1. History database D1 may manage an "application state" in addition to the "start time," the "end time," the "input voice," and the "operation content" in association with one another. The "application state" is a parameter that determines a state of an application that the user is operating. Specifically, the "application state" is, for example, a displayed coordinate and a display magnification of a map on a map application, an address of a displayed page (uniform resource locator (URL)), a display position, and a display magnification of a Web browser.

A description will be given to a case in which an operation is performed in the user's operation from time t1 to time t2 of part (c) of FIG. 5 to change the display magnification of the map application. It is assumed that the display magnification of the map application has been set to 1/10,000 at time t1 and the display magnification has been changed to 1/25,000 at time t2 in response to an operation of changing the display magnification. In this case, at a time of playback display from time t21, the playback display needs to be performed after the display magnification is set back to 1/10,000, which is the display magnification at time t1.

In this case, controller 14 records the display magnification at time t1 in history database D1 as the "application state." Therefore, controller 14 obtains the display magnification at time t1 when the playback display is started to be performed at time t21, and controller 14 changes the display magnification of the map application to the obtained value.

In the above description, the start time of a speech is used as the identification information by which an input voice and a user's operation are associated with each other; however, the present invention is not limited to above example, and another time information may be used, for example, an end time. Further, the identification information may be various identification information other than time information, and, for example, an identification data (ID) may be added to each single speech sentence, where the ID is incremented in order of speech.

The detection process for the start of a speech on step S11 is performed in response to the detection of the pushing down of the speech start button; however, the present invention is not limited to this example. The detection process for the start of a speech may be performed depending on, for example, a speech analysis result of a voice being input by voice input unit 12. For example, the detection process for the start of a speech is performed when translation device 1 detects a predetermined phrase meaning the start of a speech.

The detection process for the end of a speech on step S14 is also performed in response to the detection of the pushing down of the speech end button; however, the present invention is not limited to this example. The detection process for the end of a speech may be performed depending on, for example, a speech analysis result. For example, the detection process for the end of a speech may be performed in response to the detection, of a conjunction, by translation device 1 via voice input unit 12, or in response to the detection of a silence state for a predetermined period or longer.

Further, in the process of step S17, translation device 1 does not need to transmit all of the information registered in history database D1 to translation server 2. For example, translation device 1 may transmit only the information of the input voice to translation server 2. At this time, for example, translation device 1 may be configured not to accept a new input voice until receiving a translation result of the transmitted input voice.

In the above description, the process of step S13 of FIG. 6 is a process in which the input voice and the operation content are temporarily stored while the user is speaking, in order to register the input voice and the operation content in history database D1. Instead of this operation, the process of step S13 may be a process in which the input voice and the operation content are directly recorded in history database D1. In this case, in the flowchart shown in FIG. 6, it is possible to omit the process of step S16 in which the information temporarily stored in the internal memory is recorded in history database D1.

### 2-2-2. Playback process of translation device

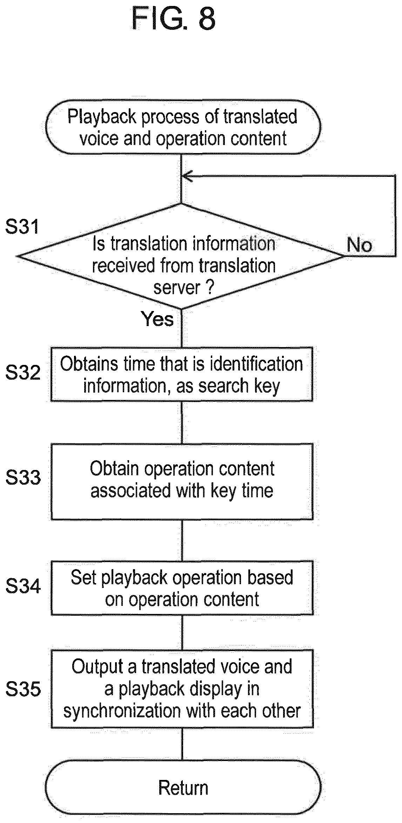

The playback process of translation device 1 in step S3 of FIG. 4 is described with reference to FIG. 8. FIG. 8 is a flowchart showing the playback process (step S3 of FIG. 4) of translation device 1.

First, controller 14 determines whether translation information obtaining unit 16 has received translation information from translation server 2 (step S31). For example, in the examples of FIGS. 3A and 3B, translation information obtaining unit 16 receives the translation information containing the voice information of the translation sentence "Please go straight along this road." and the identification information (t1) (see FIG. 4). The process of step S31 is repeated, for example, cyclically (step S31: No) until translation information obtaining unit 16 receives the translation information.

If translation information obtaining unit 16 receives the translation information (step S31: Yes), controller 14 obtains the time, which is the identification information contained in the received translation information, as a key for searching in history database D1 (step S32). In the above example, controller 14 obtains, as a key, start time t1 of the input voice of the translation source.

Next, controller 14 functions as operation playback unit 143 and searches history database D1 to obtain the operation content associated with the time of the obtained key (step S33). In the examples of FIGS. 3A and 3B, operation playback unit 143 refers to history database D1 exemplified in FIG. 7 to obtain the operation content "(10, 15), (12,15), ···" associated with the input voice of the translation source. As described above, on the basis of the received translation information, it is possible to identify the operation content of the user's operation, which was input simultaneously with the input voice of the translation source in the translation information.

Further, controller 14 functions as operation playback unit 143 and sets a display operation (playback operation), of playback display, based on the obtained operation content (step S34). In the examples of FIGS. 3A and 3B, operation playback unit 143 issues to display controller 141 a command, depending on the obtained operation content, for expressing on the screen, for example, the touch operation performed by the user (step S34). On the basis of the command, display controller 141 causes display 13 to display an icon such that the icon follows the history of the touch position (see part (f) of FIG. 5).

Further, in the above example, operation playback unit 143 issues, to display controller 141, a command representing the same content as the signal generated by operation input unit 11 in step S13, for example (step S34). On the basis of the command, display controller 141 causes display 13 to display an arrow image so as to reproduce the arrow image displayed from time t1, at which the user started a touch operation (see parts (c) and (f) of FIG. 5). When making the arrow image be displayed, display controller 141 may or may not cause display 13 to display an icon following the touch position history.

Next, controller 14 generates a synchronization signal for synchronizing, for example, the operation of voice output unit 17 and the operation of display controller 141. Then, on the basis of the synchronization signal, controller 14 causes the voice output of the voice information of the translation result included in the received translation information and the playback display corresponding to the operation content to be displayed in synchronization with each other (step S35). Note that controller 14 does not necessarily have to cause the playback display to be output simultaneously with the voice output. Controller 14 may cause the voice output and the playback display in synchronization with each other such that the playback display is output a predetermined period after the voice output.

In the examples of FIGS. 3A and 3B, voice output unit 17 starts to voice-output the translation sentence "Please go straight ···" at time t21 as shown in part (e) of FIG. 5. At this time, display controller 141 starts to perform the playback display following the command from operation playback unit 143 at time t21 in synchronization with the voice output by voice output unit 17.

Controller 14 completes the process according to the flowchart by performing the process of step S35.

By the above process, the operation content of the user's operation associated with the input voice is played back and displayed in synchronization with the voice output of the translation result of the input voice (step S35). By this operation, for example, the operation content when the host spoke is played back and displayed in synchronization with the voice output of the translation result. Therefore, the guest listening to the translation result of the host's speech can more easily understand the host's intention.

In step S35 described above, for example, when the input period of the input voice is longer than the voice output period of the translation result, translation device 1 may extend or repeatedly play back the playback display of the operation content, depending on the length of the voice output period. Alternatively, when the period of the input voice is shorter than the voice output period of the translation result, translation device 1 may thin out or play quicker the playback display.

For example, in step S34, operation playback unit 143 of translation device 1 calculates the input period of the input voice on the basis of the start time and the end time registered in history database D1. Further, operation playback unit 143 obtains the voice output period of the translation result on the basis of the translation information obtained by translation information obtaining unit 16. Operation playback unit 143 compares the input period and the voice output period and sets a setting of, for example, extending or thinning out of the playback display. By this operation, operation playback unit 143 performs setting of the playback operation of display 13 such that the voice output period of the translation result and the playback display of the operation content are in synchronization with each other.

Note that in the case that the operation based on the operation content is set without particularly comparing the input period of the input voice and the voice output period of the translation result, history database D1 does not need to manage both of the start time and the end time. In this case, the process of step S12 or step S15 may be omitted in the input process (FIG. 6).

### 3. Effects and the like

As described above, in the present exemplary embodiment, translation device 1 includes operation input unit 11, voice input unit 12, translation information obtaining unit 16, voice output unit 17 as an example of an information output unit, display 13 as an example of an execution unit, and controller 14. A user's operation is input to operation input unit 11. A voice is input to voice input unit 12. Translation information obtaining unit 16 obtains a translation result of the voice having been input to voice input unit 12. Voice output unit 17 outputs the translation result. Display 13 performs a display operation as an output operation corresponding to the user's operation. Controller 14 controls the processing by display 13. Controller 14 causes display 13 to perform, in synchronization with outputting of the translation result by voice output unit 17, a processing based on an operation content of the user's operation having been input to operation input unit 11 while the voice corresponding to the translation result was being input.

Further, in the present exemplary embodiment, voice output unit 17 outputs, as a voice, the translation result.

With translation device 1 described above, a user's operation corresponding to an intended content is input to translation device 1 while a voice as a translation object is being input, and the operation content of the user's operation having been input is output in synchronization with the voice output of the translation result. By this operation, the user, who speaks the translation object, can easily communicate the host's intended content to a partner, who listens to the voice output of the translation result.

In the present exemplary embodiment, controller 14 sets the operation based on the operation content such that the period of the translation result being output and the period of the operation based on the operation content of the user's operation being performed are in synchronization with each other. By this setting, the partner listening to the voice output of the translation result can easily confirm the operation content being output.

Further, in the present exemplary embodiment, controller 14 causes display 13 to perform a processing based on the operation content of the user's operation in synchronization with the input of the user's operation to operation input unit 11. By this operation, for example, the user can confirm the processing being output by display 13 while performing a user's operation like the arrow image shown in FIG. 3A and simultaneously speaking. Therefore, for example, the host can easily use translation device 1.

Further, in the present exemplary embodiment, the processing synchronized with outputting of the translation result includes an operation for reproducing a processing synchronized with inputting of the user's operation to operation input unit 11. By this operation, for example, like the arrow image in FIG. 3B, the output processing confirmed by the user while the user was speaking is played back as it was and can thus help mutual understanding between the host and the guest.

Further, in the present exemplary embodiment, the processing synchronized with outputting of the translation result includes a processing expressing that a user's operation is being performed. This operation can give an impression to the guest as if the operation content of the user's operation having been input is being actually performed during the voice output of the translation result, for example, like the icon displayed in FIG. 3B. Therefore, the guest can easily use translation device 1.

In addition, in the present exemplary embodiment, translation device 1 further includes storage 15. Storage 15 records therein history database D1 that manages the voice information representing the voice having been input to voice input unit 12 and the user's operation having been input to operation input unit 11 while a voice was being input in association with each other. Controller 14 refers to history database D1 recorded in storage 15 and causes display 13 to perform a processing based on the operation content of the user's operation in synchronization with the voice output of the translation result of the voice represented by the voice information. By this operation, translation device 1 can manage the operation content synchronized with the translation information, on the basis of history database D1 recorded in storage 15.

Further, in the present exemplary embodiment, the execution unit of translation device 1 includes display 13 that displays information. Controller 14 causes display 13 to display the information corresponding to the operation content of the user's operation in synchronization with the voice output of the translation result. By this operation, the user can visually confirm the information corresponding to the operation content.

Further, in the present exemplary embodiment, translation system 20 includes translation device 1 and translation server 2. Translation server 2 receives, from translation device 1, voice information of a voice having been input to voice input unit 12 and performs a translation process on the voice information. With this arrangement, translation device 1 can obtain translation information from translation server 2 and can voice-output the translation information.

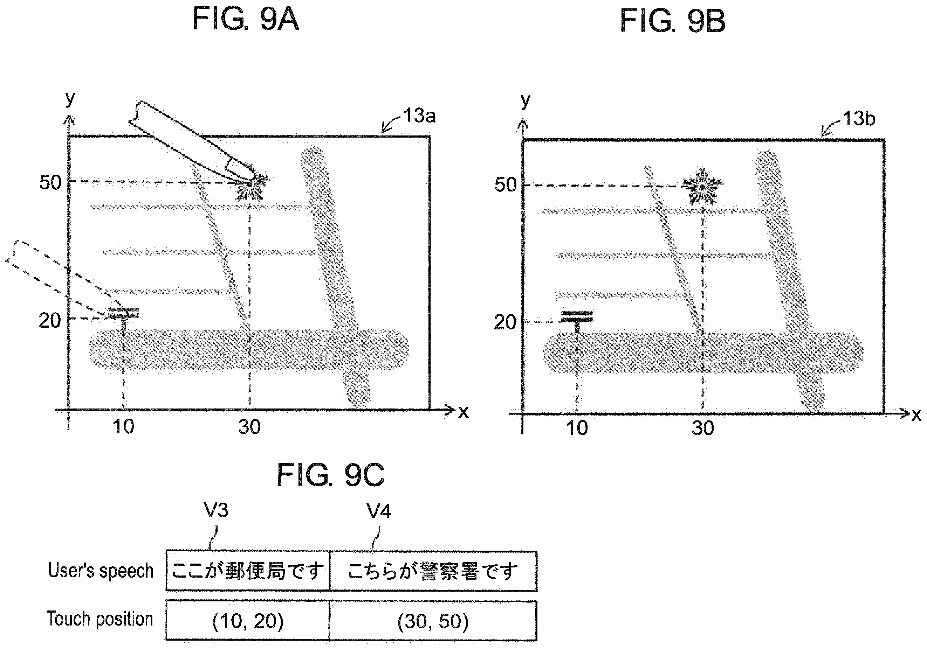

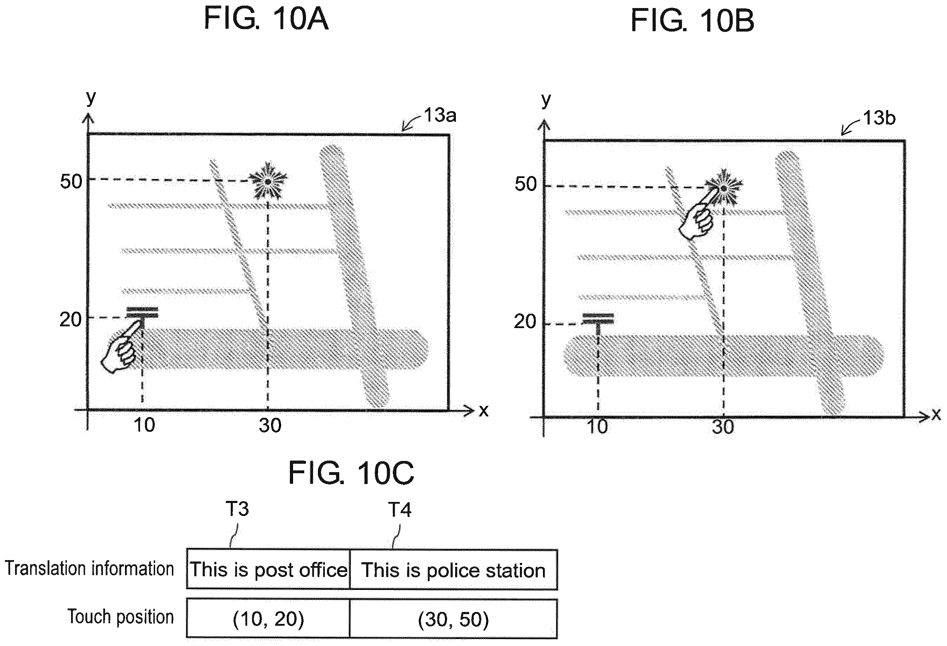

With reference to FIG. 3A to FIG. 3D, an example is described in which machine translation is performed for speech sentences one by one in translation system 20 by using a single screen; however, the present disclosure is not limited to such an example. In translation system 20, a plurality of screens may be used to perform machine translation. Further, machine translation does not need to be performed for each single speech sentence, and real time translation may be performed. This modified example is described with reference to FIG. 9A, FIG. 9B, FIG. 10A, and FIG. 10B.

FIG. 9A is a display example of a host-use screen. FIG. 9B is a display example of a guest-use screen. FIG. 9C shows input voices spoken by a host and operation contents of a host's operation.

In this example, as shown in FIGS. 9A and 9B, host-use screen 13a and guest-use screen 13b are separately displayed. Host-use screen 13a is a screen on which a host user visually recognizes and performs a touch operation. Guest-use screen 13b is a screen on which a guest user visually recognizes. Host-use and guest-use screens 13a and 13b may be displayed as two screens on one display surface of display 13. Alternatively, display 13 may have a plurality of display surfaces each display each of host-use and guest-use screens 13a and 13b. In this case, each display surface is appropriately display-controlled by display controller 141, for example, via wired connection or wireless connection.

In the example of FIG. 9A to FIG. 9C, the host speaks the words of voice V3 while touching host-use screen 13a at a first coordinate (10, 20) as shown in FIG. 9C, and subsequently speaks the words of voice V4 while touching at a second coordinate (30, 50). Note that in this example, a display operation is not particularly generated by the host's touch operation in host-use screen 13a.

At this time, controller 14 of translation device 1 detects a break between two voices V3 and V4 by, for example, detecting silence or a conjunction on the basis of the input voice from voice input unit 12, detecting a change of the touch position on the basis of the signal form operation input unit 11, or the like. By this operation, in translation device 1, voices V3 and V4 are sequentially registered in history database D1 in association with the first and second coordinates (10, 20), (30, 50), respectively. Translation device 1 transmits, to translation server 2, the voice information of each of the input voices at appropriate times together with identification information. Then, translation device 1 sequentially obtains the translation information of each of the translation results.

FIG. 10A is a display example of the guest-use screen at the time of voice outputting of a first translation result. FIG. 10B is a display example of the guest-use screen at the time of voice outputting of a second translation result. FIG. 10C shows the translation results of the host's speeches and the contents of the processings based on the host's operations.

Translation device 1 receives the translation information of translation result T3 "This is post office" corresponding to voice V3 and then voice-outputs translation result T3. As shown in FIG. 10A and FIG. 10C, translation device 1 performs, during voice output, playback display of the icon representing the touch operation performed at the time of inputting of the first input voice. Further, translation device 1 receives the translation information of translation result T4 "This is police station" corresponding to voice V4 and then voice-outputs translation result T4. As shown in FIG. 10B and FIG. 10C, translation device 1 performs, during voice outputting, playback display of the icon representing the touch operation performed at the time of inputting of the second input voice. The above-described playback display is performed on guest-use screen 13b. Therefore, the guest can easily understand the content of the playback display during voice outputting.

Further, the above-described playback display is sequentially performed at the time of the voice outputting of the translation result regardless of the state of host-use screen 13a. Therefore, the host can perform a user's operation and speak without paying any attention to the playback display, and can easily use translation device 1. Further, by using real time translation as described above, for example, in the case that instead of a host, an attendant of a conference uses translation device 1, the attendant can perform a user's operation and speak without disturbing the flow of the conference. Therefore, the attendant of the conference can easily use translation device 1.

### (Second exemplary embodiment)

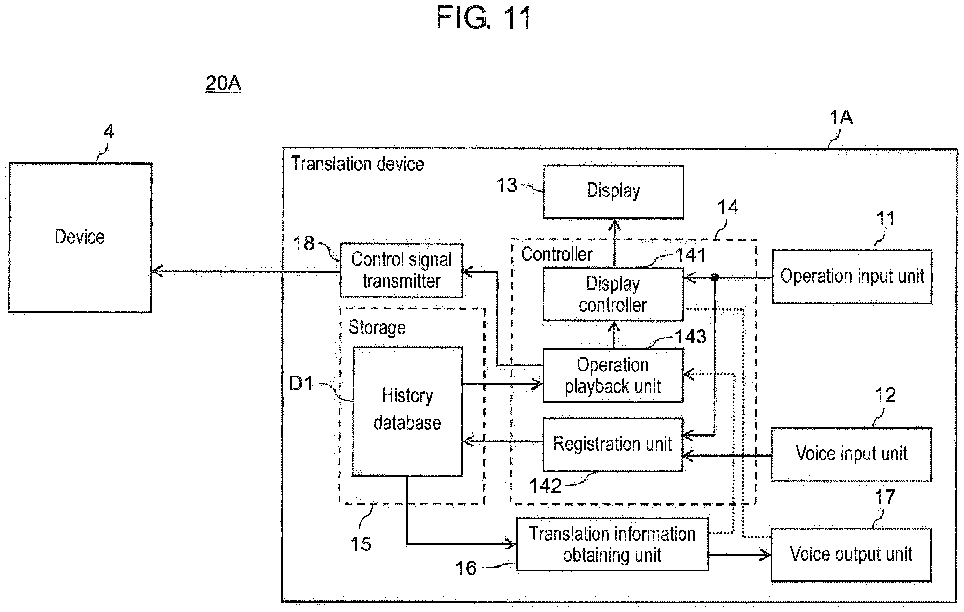

Hereinafter, a second exemplary embodiment is described with reference to FIG. 11. In the first exemplary embodiment, a description is given to translation device 1 that includes display 13 as the execution unit. In the second exemplary embodiment, a description is given to translation device 1A and translation system 20A that include a control signal transmitter to control, as the execution unit, an external device.

Hereinafter, translation device 1A and translation system 20A according to the present exemplary embodiment are described while omitting description of the same configuration and operation as in translation device 1 and translation system 20 according to the first exemplary embodiment. Note that in FIG. 11, translation server 2 is omitted.

FIG. 11 is a functional block diagram showing translation system 20A according to the present exemplary embodiment. As shown in FIG. 11, translation system 20A according to the present exemplary embodiment further includes device 4 (an example of the external device) in addition to translation device 1A. Translation device 1A according to the present exemplary embodiment further includes control signal transmitter 18 in addition to the configuration of translation device 1 according to the first exemplary embodiment.

Control signal transmitter 18 transmits a control signal for controlling an operation of predetermined device 4, for example, in infrared communication. Control signal transmitter 18 includes, for example, an infrared light emitting diode (LED) and a transmitter circuit. Control signal transmitter 18 is an example of a signal transmitter according to the present exemplary embodiment and an example of the execution unit in translation device 1A.

Device 4 may be a display that performs screen display when translation information in translation device 1A is output. Further, device 4 may be various electronic devices, home appliances such as an air conditioner and a television set, and working devices such as a manipulator of a robot. Further, an operation object, of device 4, based on the above control signal may be, for example, a button, a lever, and a remote panel.

Translation device 1A according to the present exemplary embodiment can be used, for example, for a host to instruct a guest or the like how to operate device 4. For example, display 13 displays a graphical user interface (GUI) representing device 4 and other graphics, and the host operates the GUI representing device 4 via operation input unit 11 while speaking. For example, the host operates the GUI, speaking an instruction of a series of processing procedures, for example, "First, turn on the power button of device 4; next, flip down the left lever to the far side; further, flip down the right lever to the right."

At this time, translation device 1A obtains translation information representing a translation result of an input voice of a speech in the same way as in the first exemplary embodiment. Next, translation device 1A according to the present exemplary embodiment transmits a control signal for controlling such that device 4 performs, in synchronization with a voice output of the translation information, an operation corresponding to an operation content during a speech of the user. Then, device 4 performs, at the time of the voice outputting of the translation result, the same processing operation as the processing procedures performed on the GUI of device 4. By this operation, the guest can confirm the actual processing of device 4 at the time of the voice outputting of the translation result and can thus easily understand the content of the translation result.

As described above, in the present exemplary embodiment, the execution unit of translation device 1A includes control signal transmitter 18 that transmits a control signal to device 4. Controller 14 causes control signal transmitter 18 to transmit, to device 4, the control signal for controlling the operation of device 4, in synchronization with the voice output of the translation result.

By this operation, the actual processing of device 4 can be confirmed in synchronization with the voice output of the translation result, and the content intended by the user who performed the operation can be easily communicated.

In the above description, the operation object of the host is the GUI, on display 13, representing device 4; however, the operation object does not have to be the GUI and may by actual device 4, for example. For example, when the host operates device 4, translation device 1A transmits a control signal from controller 14 to device 4. In this case, control signal transmitter 18 functions as the execution unit also at the time of the operation of the user, and display 13 may be appropriately omitted in translation device 1A.

### (Third exemplary embodiment)

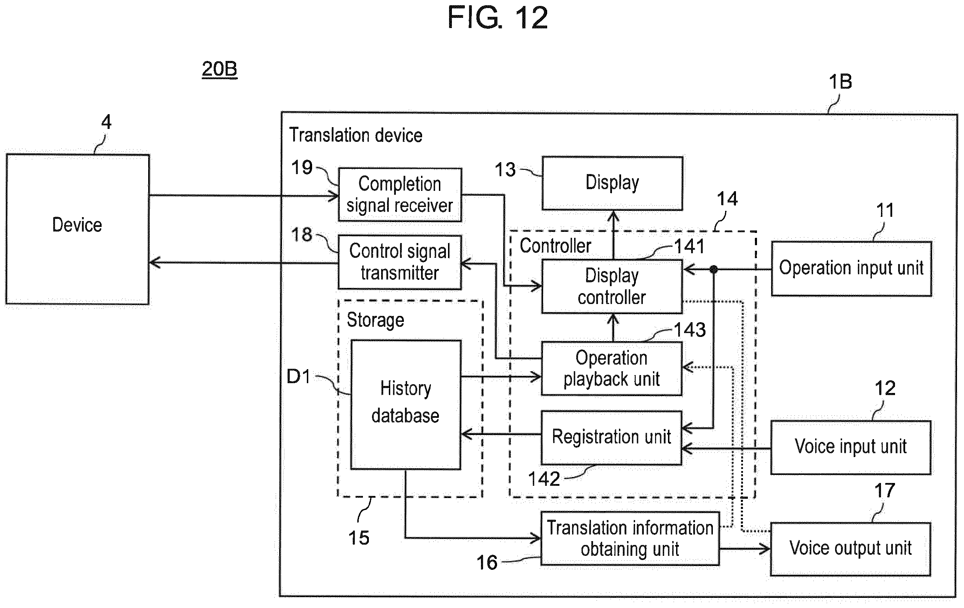

Hereinafter, a third exemplary embodiment is described with reference to FIG. 12. In the third exemplary embodiment, a description is given to translation device 1B that has a function for limiting, depending on an operation state of device 4, the translation operation in translation system 20A of the second exemplary embodiment.

Hereinafter, translation device 1B and translation system 20B according to the present exemplary embodiment are described while omitting a description of the same configuration and operation as in translation devices 1, 1A and translation systems 20, 20A according to the first and second exemplary embodiments. Note that in FIG. 12, translation server 2 is omitted.

FIG. 12 is a functional block diagram showing translation system 20B according to the present exemplary embodiment. In translation system 20B according to the present exemplary embodiment, translation device 1B further includes completion signal receiver 19 in addition to the configuration of translation device 1A according to the second exemplary embodiment. Completion signal receiver 19 receives a predetermined completion signal from device 4, for example, in infrared communication. The completion signal is a signal that indicates that device 4 has completed a predetermined operation. Completion signal receiver 19 includes, for example, an infrared light receiver and a receiving circuit. Completion signal receiver 19 is an example of a signal receiver of translation device 1B.

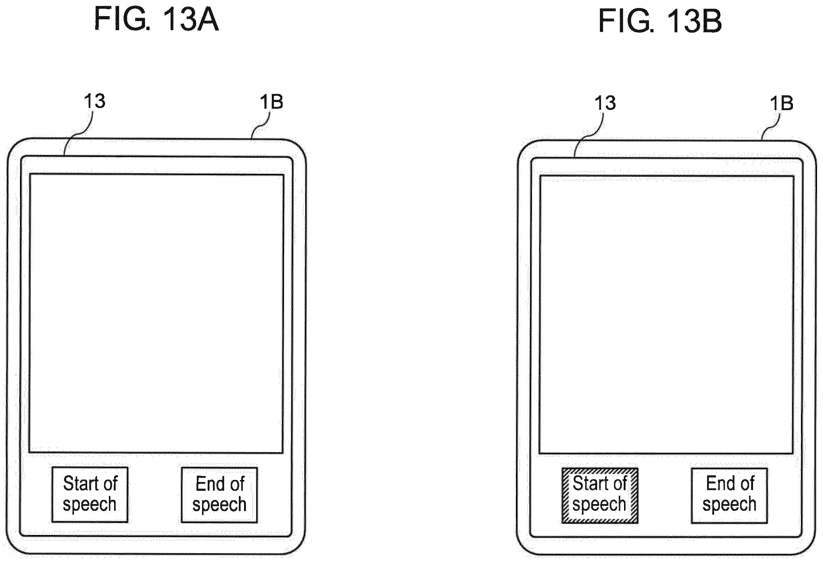

FIGS. 13A and 13B show display examples of display 13 of translation device 1B before and after transmission of a control signal. As shown in FIGS. 13A and 13B, translation device 1B displays a speech start button and a speech end button on display 13. FIG. 13B shows a display state in which an operation of speech start button is inhibited.

Before a control signal is transmitted, controller 14 of translation device 1B according to the present exemplary embodiment starts a translation operation based on an input voice from voice input unit 12 in response to a pressing down operation of the speech start button by the user in the same manner as in the second exemplary embodiment (see FIG. 13A). In this translation operation, when a control signal has been transmitted from translation device 1B on the basis of the user's operation having been input, display controller 141 of translation device 1B switches the display by display 13 as shown in FIG. 13B.

In the display state of FIG. 13B, controller 14 restricts inputting of a voice, to voice input unit 12, for a translation operation. In this state, even if the user performs a pressing down operation of the speech start button, controller 14 does not start a translation operation for a new input voice. Controller 14 keeps the display state of FIG. 13B until controller 14 receives a completion signal from device 4 via completion signal receiver 19.

In the present exemplary embodiment, when device 4 has completed the operation based on the control signal received from translation device 1B, device 4 transmits the completion signal to translation device 1B. This arrangement can prevent a new control signal from being transmitted to device 4 before device 4 finishes operation. Therefore, in translation device 1B, it is possible to adjust timing for accepting a new input voice as a translation object.

As described above, in the present exemplary embodiment, translation device 1B further includes completion signal receiver 19 that receives an operation completion signal from device 4. Controller 14 restricts inputting of a voice to voice input unit 12 in a period from transmission of a control signal to reception of a completion signal from device 4 via completion signal receiver 19, where the completion signal indicates completion of the operation controlled by the control signal.

This operation realizes a function that restricts an input process of translation device 1B, depending on the operation state of device 4, and the user can thus easily explain the content corresponding to the operation

In the above description, an example is described in which the speech start button displayed on display 13 is used to restrict the input process on the basis of the operation completion signal; however, the input process may be restricted on the basis of the operation completion signal without using the displayed speech start button. Controller 14 may restrict the input process from being performed and restrict inputting of a voice to voice input unit 12, for example, after the control signal is transmitted from control signal transmitter 18 to device 4 until the completion signal is received from device 4.

### (Other exemplary embodiments)

In the above, the first to third exemplary embodiments are described as examples of the technique disclosed in the present application. However, the technique in the present disclosure is not limited to the above exemplary embodiments and can also be applied to an exemplary embodiment in which modification, replacement, addition, removal, or the like is performed appropriately. Additionally, the components described in the above exemplary embodiments can be combined to configure a new exemplary embodiment. Therefore, other exemplary embodiments are described below as examples.

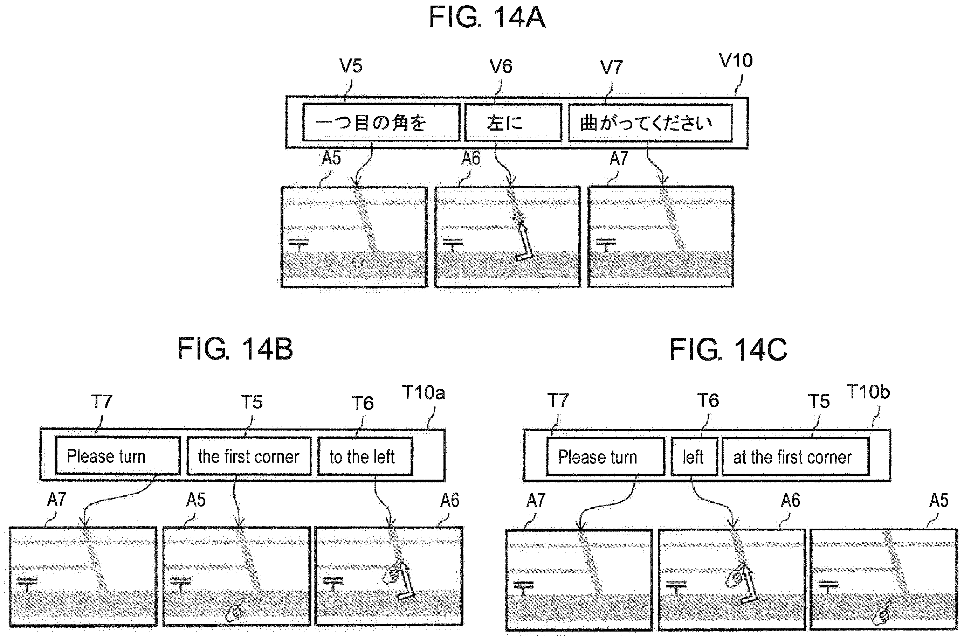

In the above exemplary embodiments, an example is described in which an input voice and an operation content of a user's operation are associated with each other for each speech sentence, in translation device 1. It is also possible to associate an input voice and an operation content of a user's operation with each other by a predetermined unit such as a phrase or a word into which a speech sentence can be divided. This modified example is described with reference to FIGS. 14A to 14C.

FIG. 14A shows an operation example in which a plurality of user's operations are associated with a single speech sentence. In the example of FIG. 14A, the user speaks voice V10 constituted by voice V5, voice V6, and voice V7. The user sequentially performs user's operations including first operation content A5, second operation content A6, and third operation content A7 while speaking voice V10. At this time, translation device 1 successively associates voice V5 with first operation content A1, voice V6 with second operation content A2, and voice V7 with third operation content A3, on the basis of the operation timings of the user's operations. Each piece of associated information is registered in history database D1 in translation device 1.

FIGS. 14B and 14C each show a pattern of each of a first and second translation results. With reference to the first pattern shown in FIG. 14B, the translation result corresponding to voice V10 shows translation result T10a "Please turn the first corner to the left." With reference to the second pattern shown in FIG. 14C, the translation result corresponding to voice V10 shows translation result T10b "Please turn left at the first corner." In this manner, it can be thought that the same speech sentence may result in translation results having different patterns of word orders.

To address this issue, translation device 1 changes the order of playback of operation contents A5, A6, and A7, corresponding to the word order of the translation results on the basis of operation contents A5, A6, and A7 associated as described above. For example, at a time of voice outputting of the translation result in the first pattern, as shown in FIG. 14B, translation device 1 associates translation result T7 "Please turn" with third operation content A7, translation result T5 "the first corner" with first operation content A5, and translation result T6 "to the left" with second operation content A6. On the other hand, at a time of voice outputting of the translation result in the second pattern, as shown in FIG. 14C, translation device 1 associates translation result T7 "Please turn" with third operation content A7, translation result T6 "left" with second operation content A6, and translation result T5 "at the first corner" with first operation content A5.

In this case, translation device 1 previously obtains a relationship between words before and after the translation such as the relationship between translation result T7 "Please turn" and voice V7. The relationship between words may be stored in storage 15 of translation device 1 or may be issued by translation server 2, for example.

As described above, by changing the order of playback of the operation contents, depending on the word order of the translation result, the operation contents during voice outputting are played back corresponding to the word order of the translation result. Therefore, this operation facilitates understanding of the user listening to the voice of the translation result.

In the above exemplary embodiments, examples are described in each of which the translation source language and the translation target language are respectively Japanese and English; however, the translation source language and the translation target language are not particularly limited, and various natural languages may be used.

Further, in the above exemplary embodiments, examples are described in each of which translation information obtaining unit 16 of translation device 1 obtains translation information from translation server 2 that performs a translation process; however, translation device 1 (controller 14) may perform a translation process on an input voice. In this case, translation information obtaining unit 16 obtains, as translation information, a translation result translated by the translation process having been performed as an internal process of translation device 1.

Further, in the above exemplary embodiments, a description is given to translation system 20 that include a single information processing terminal as translation device 1; however, translation system 20 may include a plurality of information processing terminals that functions as translation device 1. For example, the host and the gest each have the above information processing terminals. In this case, translation server 2 and network 3 may be used to transmit and receive various information between the information processing terminals.

Further, in the above exemplary embodiments, a description is given taking translation device 1 as an example; however, the spirit of the present disclosure may be applied to a system or a device that performs predetermined speech processing such as noise reduction or speech conversion instead of translation. That is, a system or an electronic device may be configured by replacing translation information obtaining unit 16 of translation device 1 with an obtaining unit that obtains the result of predetermined speech processing on the voice having been input to the voice input unit. In that electronic device, a controller causes the execution unit to perform a processing based on the operation content of the user's operation having been input to the operation input unit while the voice corresponding to the result of the speech processing was being input, in synchronization with the voice output of the speech processing result, which is performed by the voice output unit. This arrangement can provide an electronic device or a system in which it is easy to communicate the content intended by the user who is speaking a speech as a target of the above speech processing.

The above speech processing may be performed in the electronic device or may be performed in a server within the system. Further, the output of the translation result based on an input voice is not limited to a voice output. For example, in the case that a translation result is displayed in text form, controller 14 may cause display 13 to perform a processing based on the operation content of the user's operation having been input to the operation input unit while the voice corresponding to the translation result was being input, in synchronization with the display of texts.

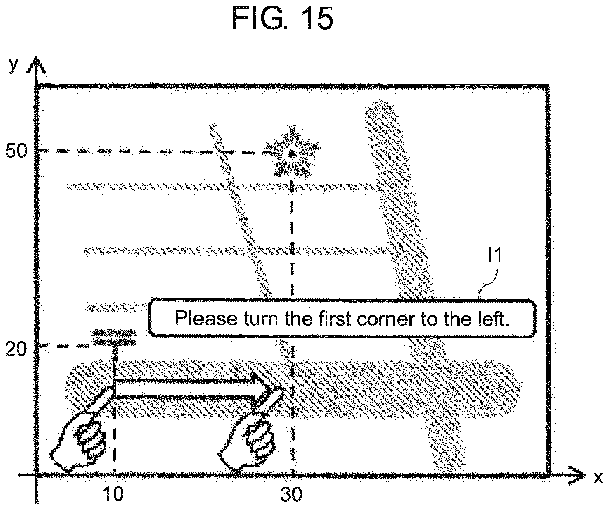

For example, display 13 may output the translation information as text information. More specifically, instead of the voice output of the translation result shown in FIG. 3B, display 13 may output, as image I1, the text information representing the translation information as shown in FIG. 15. At this time, controller 14 causes display 13 to perform the processing based on the operation content of the user's operation in synchronization with outputting of the text information. Display 13 is an example of the information output unit of translation device 1 in the present exemplary embodiment.

As described above, the exemplary embodiments are described as examples of the technique in the present disclosure. For this purpose, the attached drawings and the detailed description are provided.

Therefore, the components illustrated in the attached drawings and described in the detailed description may include, for illustration of the above-described technique, not only components essential for the solution to the problem but also components not essential for the solution to the problem. Thus, it should not be immediately deemed that, merely based on the fact that the components that are not essential are illustrated in the attached drawings and described in the detailed description, the components that are not essential are essential.

In addition, because the above exemplary embodiments are for illustrating the technique in the present disclosure as examples, various modifications, replacements, additions, removals, or the like can be made without departing from the scope of the claims or the equivalent thereto.

### INDUSTRIAL APPLICABILITY

The present disclosure can be used as a translation device that voice-outputs a translation result of a speech of a user who treats customers, guides, or gives explanations, for example.

### REFERENCE MARKS IN THE DRAWINGS

1, 1A, 1B: translation device
11: operation input unit
12: voice input unit
13: display
14: controller
15: storage
16: translation information obtaining unit
17: voice output unit
18: control signal transmitter
19: completion signal receiver
2: translation server
20, 20A, 20B: translation system
4: device

## Claims

1. A translation device comprising:
an operation input unit to which a user's operation is input;
a voice input unit to which a voice is input;
a translation information obtaining unit that obtains a translation result of the voice having been input to the voice input unit;
an information output unit that outputs the translation result;
an execution unit; and
a controller that causes the execution unit to perform, in synchronization with the outputting of the translation result by the information output unit, a processing based on an operation content of the user's operation having been input to the operation input unit while the voice corresponding to the translation result was being input.

2. The translation device according to claim 1, wherein the information output unit outputs the translation result in voice.

3. The translation device according to claim 1, wherein the information output unit outputs the translation result as text information.

4. The translation device according to any one of claims 1 to 3, wherein the controller sets the processing in a manner that a period in which the translation result is output and a period in which the processing is performed are synchronized with each other.

5. The translation device according to any one of claims 1 to 4, wherein the processing synchronized with the outputting of the translation result includes a first processing that expresses that the user's operation is performed.

6. The translation device according to any one of claims 1 to 5, wherein the controller causes the execution unit to perform a second processing based on the operation content of the user's operation, in synchronization with the inputting of the user's operation to the operation input unit.

7. The translation device according to claim 6, wherein the processing synchronized with the outputting of the translation result includes a processing that reproduces the second processing synchronized with the inputting of the user's operation to the operation input unit.

8. The translation device according to any one of claims 1 to 7, further comprising a storage that records: voice information that represents the voice having been input to the voice input unit; and the user's operation having been input to the operation input unit while the voice was being input, in association with each other,
wherein the controller refers to the voice information and the user's operation recorded in the storage, and causes the execution unit to perform the processing based on the operation content of the user's operation, in synchronization with the outputting of the translation result of the voice represented by the voice information.

9. The translation device according to any one of claims 1 to 8, wherein
the execution unit includes a display that displays information, and
the controller causes the display to display, in synchronization with the outputting of the translation result, information corresponding to the operation content of the user's operation.

10. The translation device according to any one of claims 1 to 9, wherein
the execution unit includes a signal transmitter that transmits a signal to an external device, and
the controller causes, in synchronization with the outputting of the translation result, the signal transmitter to transmit to the external device a control signal to control an operation of the external device.

11. The translation device according to claim 10, further comprising a signal receiver that receives a signal from the external device,
wherein the controller restricts inputting of a voice to the voice input unit in a period from transmission of the control signal to reception of a signal indicating completion of the operation controlled by the control signal from the external device via the signal receiver.

12. A translation system comprising:
the translation device according to any one of claims 1 to 11; and
a translation server that receives voice information representing the voice having been input to the voice input unit from the translation device, and performs a translation process on the voice information.
